# EUROPEAN PATENT APPLICATION

(11) **EP 4 414 671 A1**
(43) Date of publication of application: **14.08.2024**
(21) Application number: 23155344.7
(22) Date of filing: 07.02.2023
(51) Int. Cl.: G01J 3/18, G01J 3/36, G01J 3/443

(54) **AN OPTICAL SPECTROMETER ASSEMBLY**

(71) Applicant: Hitachi High-Tech Analytical Science GmbH, 47589 Uedem (DE)
(72) Inventor: GRAF, Heinz Jürgen, UEDEM (DE); SIMONS, Rainer, UEDEM (DE)
(74) Representative: Berggren Oy

(57) **Abstract**

According to an example embodiment, an optical spectrometer assembly (110) for an optical emission spectroscopy, OES, instrument is provided, the optical spectrometer assembly (110) comprising: an entrance aperture (112) arranged for entry of an input beam to the optical spectrometer assembly (110); and an optical system comprising a beam splitter (114) arranged to receive the input beam and split the input beam into a first beam portion that conveys at least wavelengths within a first wavelength sub-range and a second beam portion that conveys at least wavelengths within a second wavelength sub-range, where the first and second wavelength sub-ranges are substantially non-overlapping, a first optical sub-assembly (116) comprising a first grating assembly (116a) arranged to diffract the first beam portion and a first detector assembly (116c) arranged to detect one or more spectral lines of interest within the first wavelength sub-range based on the diffracted first beam portion, and a second optical sub-assembly (118) comprising a second grating assembly (118a) arranged to diffract the second beam portion and a second detector assembly (118c) arranged to detect one or more spectral lines of interest within the second wavelength sub-range based on the second beam portion, wherein the first optical sub-assembly (116) is spatially isolated from other parts of the optical assembly so as to enable providing the first and second optical sub-assemblies (116, 118) in different atmospheres.

## Description

### TECHNICAL FIELD

The present invention relates to an optical spectrometer assembly that is applicable for analysis of elemental composition of a sample.

### BACKGROUND

There are various techniques available for carrying out an analysis of elemental composition of a sample under study, where a class of such techniques relies on an analysis of the elemental composition of the sample based on characteristics of an optical emission spectrum produced by a sample under study. In general, such techniques may be referred to as optical emission spectroscopy (OES) techniques. Prominent examples of such techniques include laser induced breakdown spectroscopy (LIBS), spark OES and arc OES. Various OES techniques are widely applied both in mobile analyzer instruments that are useable in various environments and in desktop (or benchtop) analyzer instruments that are applicable e.g. in laboratory or factory conditions.

An analyzer instrument making use of an OES technique may be referred to as an OES analyzer instrument or simply as an OES analyzer. An OES analyzer instrument is typically provided with an excitation source for generating an optical emission spectrum from a sample under study, an optical spectrometer assembly involving an optical system for diffracting or dispersing the optical emission spectrum and for transferring the diffracted or dispersed optical emission spectrum to a detector assembly, and an analyzer for determining the elemental composition of the sample based on the optical emission spectrum captured at the detector assembly.

In this regard, the optical spectrometer assembly is typically designed to transfer the optical emission spectrum to the detector assembly in a manner that enables analysis of the elemental composition in a robust, reliable and accurate manner. In many cases relatively small size and simple structure are important requirements for the optical spectrometer assembly to enable its application in OES analyzer instruments of various designs, whereas previously known solutions may require application of optical spectrometers of relatively large size in order to ensure adequate spectral resolution for determining sample compositions with regard to trace analysis, thereby leading to requirements that may be at least partially contradictory to each other.

### SUMMARY

It is an object of the present invention to provide an optical spectrometer assembly that is relatively simple in structure and small in size while still enabling high-quality analysis of the elemental composition of a sample via optical emission spectroscopy.

In the following a simplified summary of some embodiments of the present invention is provided in order to facilitate a basic understanding of the invention. The summary is not, however, an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with an example embodiment, an optical spectrometer assembly for an optical emission spectroscopy, OES, instrument is provided, the optical spectrometer assembly comprising: an entrance aperture arranged for entry of an input beam to the optical spectrometer assembly; and an optical system comprising a beam splitter arranged to receive the input beam and split the input beam into a first beam portion that conveys at least wavelengths within a first wavelength sub-range and a second beam portion that conveys at least wavelengths within a second wavelength sub-range, where the first and second wavelength sub-ranges are substantially non-overlapping, a first optical sub-assembly comprising a first grating assembly arranged to diffract the first beam portion and a first detector assembly arranged to detect one or more spectral lines of interest within the first wavelength sub-range based on the diffracted first beam portion, and a second optical sub-assembly comprising a second grating assembly arranged to diffract the second beam portion and a second detector assembly arranged to detect one or more spectral lines of interest within the second wavelength sub-range based on the second beam portion, wherein the first optical sub-assembly is spatially isolated from other parts of the optical assembly so as to enable providing the first and second optical sub-assemblies in different atmospheres.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF DRAWINGS

The embodiments of the invention are illustrated by way of example, and not by way of limitation, in the figures of the accompanying drawings, where
Figure 1 schematically illustrates some aspects of an optical spectrometer assembly according to an example
Figure 2 schematically illustrates some aspects of an optical spectrometer assembly according to an example;
Figure 3 schematically illustrates some aspects of an optical spectrometer assembly according to an example; and
Figure 4 schematically illustrates some aspects of an optical spectrometer assembly according to an example.

### DETAILED DESCRIPTION

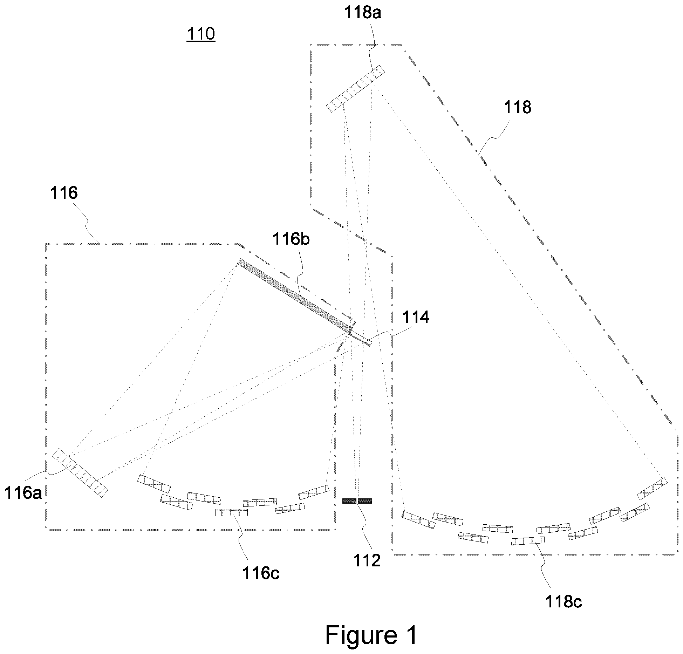

Figure 1 schematically illustrates some elements of an optical spectrometer assembly 110 according to an example. The optical spectrometer assembly 110 includes an entrance aperture 112, a beam splitter 114, a first optical sub-assembly 116 and a second optical sub-assembly 118. While the example of Figure 1 serves to illustrate an example of the optical spectrometer assembly 110 according to the present disclosure, it also serves to illustrate a framework for implementing an optical spectrometer that facilitates detection of one or more spectral lines of interest using an optical arrangement that is relatively simple in structure and small in size and that facilitates robust and reliable analysis of elemental composition of a sample under study via application of an analyzer instrument that employs an OES technique, i.e. an OES instrument.

In various examples the optical spectrometer assembly 110 may include a number of elements that are not included or depicted in the example of Figure 1. Moreover, the schematic illustration of Figure 1 does not aim at accurately illustrating positions of its elements with respect to each other, sizes of its elements with respect to each other or appearance of its elements but it aims at illustrating at least some of those characteristics that are useful for describing a general structure of the optical spectrometer assembly 110 according to the present disclosure together with some advantageous characteristics of its operation.

The entrance aperture 112 is arranged for an input beam to enter the spectrometer assembly 110. In other words, the entrance aperture 112 allows for reception of an input beam into the spectrometer assembly 110. The entrance aperture 112 may be also referred to as an entrance slit. Operation of the optical spectrometer assembly 110 is based on a single input beam and hence the entrance aperture 112 comprises a single aperture that serves as the entry point for the single input beam. The optical spectrometer assembly 110 may be employed in an OES instrument and hence the input beam may comprise an optical emission spectrum emitted from a sample under study via operation of the OES instrument. Consequently, the spectral content of the input beam depends on elemental composition of the sample under study, and it may include one or more emission peaks, i.e. spectral lines, at wavelengths that are characteristic of elements appearing in the sample under study. Typically, the spectral lines of interest appear in a wavelength range that extends from approximately 120 to approximately 780 nanometers (nm).

The beam splitter 114 may be arranged to receive the input beam and to split the input beam at least into a first beam portion and a second beam portion, where the first beam portion includes at least those wavelengths that are within a first wavelength sub-range and the second beam portion includes at least those wavelengths that are within a second wavelength sub-range. In this regard, the first and second wavelength sub-ranges are substantially non-overlapping, whereas the first and second wavelength ranges are preferably adjacent to each other and the first wavelength sub-range preferably covers wavelengths that are shorter than those covered by the second wavelength sub-range. As an example in this regard, the first wavelength sub-range may comprise wavelengths that are shorter than or equal to a predefined wavelength threshold and the second wavelength sub-range may comprise wavelengths that are longer than the predefined wavelength threshold. In this regard, an applicable value for the wavelength threshold may depend on desired characteristics of the first and second wavelength sub-ranges and/or on an expected spectral distribution of the one or more spectral lines of interest in the input beam. As a non-limiting example, the wavelength threshold may be a value chosen from a range from 220 nm to 235 nm, e.g. 225 nm.

In various examples, the beam splitter 114 may be arranged to split the input beam into the first and second beam portions in one of the following ways:
- In a first approach, the beam splitter 114 may be arranged to split the input beam such that the first beam portion includes wavelengths of the first wavelength sub-range together with wavelengths of the second wavelength sub-range and the second beam portion includes wavelengths of the second wavelength sub-range together with wavelengths of the first wavelength sub-range.
- In a second approach, the beam splitter 114 may be arranged to split the input beam such that the first beam portion includes wavelengths of the first wavelength sub-range but does not include wavelengths of the second wavelength sub-range and the second beam portion includes wavelengths of the second wavelength sub-range but does not include wavelengths of the first wavelength sub-range.

Regardless of applying the beam splitter 114 according to the first approach or according to the second approach, the first beam portion may be applied for detection of those ones of the one or more spectral lines of interest that are within the first wavelength sub-range and the second beam portion may be applied for detection of those ones of the one or more spectral lines of interest that are within the second wavelength sub-range.

In an example, the beam splitter 114 may comprise a beam splitting mirror arranged to provide the first beam portion as light reflected from the beam splitting mirror and provide the second beam portion as light transmitting through the beam splitting mirror. As an example, the beam splitting mirror may comprise a coating arranged on a substrate, where the coating is arranged to reflect at least wavelengths within the first wavelength sub-range. According to an example, the substrate may comprise a calcite substrate, whereas in other examples the substrate may comprise a quartz or magnesium fluoride substrate or an N-BK7 substrate.

As an example of the beam splitting mirror arranged to operate according to the first approach, the coating may be arranged to reflect a first predefined amount of the light directed to the beam splitting mirror as the first beam portion and to pass through a second predefined amount of the light directed to the beam splitting mirror as the second beam portion without substantially limiting the spectral content of the first and second beam portions. In this regard, the beam splitting mirror may be arranged to reflect a first predefined percentage of the light intensity as the first beam portion and to pass through a second predefined percentage of the light intensity as the second beam portion, where the first and second percentages add up substantially to 100 %. In a non-limiting example, each of the first and second predefined percentages may be 50 %, thereby splitting the light intensity of the input beam evenly for the first and second beam portions, whereas in other examples different intensity splitting may be applied. According to an example, the coating may comprise a relatively thin aluminum layer (having a thickness in the order of a few tens of nm), whereas in another example the coating may comprise a suitable pattern including a first plurality of reflective portions and a second plurality of transmissive portions. Non-limiting examples of suitable patterns include polka dots or stripes that are arranged to provide a desired ratio between reflective and transmissive areas in order to provide the desired intensity distribution between the first and second beam portions.

As an example of the beam splitting mirror arranged to operate according to the second approach, the coating may be reflective for wavelengths within the first wavelength sub-range while it may be substantially transparent for wavelengths within the second wavelength sub-range. As an example in this regard, the coating may comprise a dichroic coating, thereby providing the beam splitter 114 as a dichroic mirror, which may be arranged to
- reflect wavelengths that are shorter than or equal to the wavelength threshold, thereby forming the first beam portion that conveys wavelengths within the first wavelength sub-range (substantially without wavelengths of the second wavelength sub-range), and
- pass through wavelengths that are longer than the wavelength threshold, thereby forming the second beam portion that conveys wavelengths within the second sub-range (substantially without wavelengths of the first wavelength sub-range).

Hence, the beam splitting mirror operating according to the second approach described above may enable splitting the wavelength range conveyed in the input beam into two substantially non-overlapping parts without substantially limiting the light intensity at the respective wavelength sub-ranges of the first and second beam portions.

An optical system within the optical spectrometer assembly 110 comprises, in addition to the beam splitter 114, the first optical sub-assembly 116 and the second optical sub-assembly 118 referred to in the foregoing. The first optical sub-assembly 116 is arranged to receive the first beam portion from the beam splitter 114 and to detect the one or more spectral lines of interest within the first wavelength sub-range, whereas the second optical sub-assembly is arranged to receive the second beam portion from the beam splitter 114 and to detect the one or more spectral lines of interest within the second wavelength sub-range. In some examples, the optical system may comprise further optical components that are not provided as components of the first optical sub-assembly 116 or the second optical sub-assembly 118. Such further optical components may include one or more mirrors, one or more lenses, one or more diffracting or dispersing elements such as gratings and/or prisms. At least some of such further optical components may be provided as a third optical sub-assembly that is arranged for detection of the one or more spectral lines of interest within a third wavelength sub-range that is substantially non-overlapping with the first and second wavelength sub-ranges and covers wavelengths that are longer than those covered by the first and second wavelength sub-ranges. Non-limiting examples of extracting a third beam portion that includes wavelengths within the third wavelength sub-range based on the first and/or second beam portion are described in the following.

The first optical sub-assembly 116 comprises a first grating assembly 116a arranged to receive the first beam portion from the beam splitter 114 and a first detector assembly 116c arranged to receive a first spectrum diffracted from the first grating assembly 116a, where the first spectrum covers at least the first wavelength sub-range. In the example of Figure 1 the first optical sub-assembly 116 further comprises a first reflector assembly 116b arranged to reflect the first spectrum from the first grating assembly 116a towards the first detector assembly 116c. The first grating assembly 116a is positioned with respect to the beam splitter 114 such that it receives the first beam portion reflected from the beam splitter 114 substantially in its entirety. Moreover, the first reflector assembly 116b and the first detector assembly 116c are positioned with respect to the first grating assembly 116a such that the first spectrum of the first beam portion from the first grating assembly 116a is reflected via the first reflector assembly 116b towards the first detector assembly 116c. Hence, the first grating assembly 116a and the first reflector assembly 116b are arranged to provide a first light path for transferring light at wavelengths within the first wavelength sub-range from the beam splitter 114 to the first detector assembly 116c.

While the arrangement according to the example of Figure 1 that includes the first reflector assembly 116b for folding the first spectrum may enable keeping the size of the first optical sub-assembly relatively small, in other examples the first reflector assembly 116b shown in the example of Figure 1 may be omitted and the first detector assembly 116c may be positioned with respect to the first grating assembly 116a such that the first detector assembly 116c receives the first spectrum directly from the first grating assembly 116a. Such a modification of the first optical sub-assembly 116 enables a simpler structure (via a smaller number of components) while it may result in increased size of the first optical sub-assembly 116. In another modification of the first optical sub-assembly 116 the first reflector assembly 116b may be replaced by a transmission grating or by a prism arranged to serve as an order sorting filter.

The second optical sub-assembly 118 comprises a second grating assembly 118a arranged to receive the second beam portion from the beam splitter 114 and a second detector assembly 118c arranged to receive a second spectrum diffracted from the second grating assembly 118a, where the second spectrum diffracted from the second grating assembly 118a covers at least the second wavelength sub-range. In this regard, the second grating assembly 118a is positioned with respect to the beam splitter 114 such that it receives the second beam portion transmitted through the beam splitter 114 substantially in its entirety. Hence, the second grating assembly 118a is arranged to provide a second light path for transferring light at wavelengths within the second wavelength sub-range from the beam splitter 114 to the second detector assembly 118c by diffraction from the second grating assembly 118a. In another example, the second optical sub-assembly 118 may further include a second reflector assembly, whereas in this example the second reflector assembly and the second detector assembly 118c are positioned with respect to the second grating assembly 118a such that the second spectrum of the second beam portion that is diffracted from the second grating assembly 118a is reflected via the second reflector assembly towards the second detector assembly 118c. Such folding of the second wavelength sub-range may enable further reduction in size of the optical spectrometer assembly 110.

Each of the first grating assembly 116a and the second grating assembly 118a may comprise a respective reflective diffraction grating having characteristics chosen in view of first and second wavelength sub-ranges, possibly further in view of requirements arising from an intended usage of the optical spectrometer assembly 110. As an example in this regard, characteristics of the first grating assembly 116a may be chosen such that it diffracts the first spectrum that covers at least the first wavelength sub-range conveyed in the first beam portion received from the beam splitter 114 at a spectral resolution (SR) considered sufficient for the first wavelength sub-range. Along similar lines, as an example, characteristics of the second grating assembly 118a may be chosen such that it diffracts the second spectrum that covers at least the second wavelength sub-range conveyed in the second beam portion received from the beam splitter 114 at a spectral resolution considered sufficient for the second wavelength sub-range. Non-limiting examples of grating characteristics considered in this regard include a grating constant G, a substrate radius R and/or the spectral resolution SR.

Since the requirements with respect to the accessible wavelength range enabled by a grating and spectral resolution of the grating are typically different for the first and second wavelength sub-ranges, using the second grating assembly 118a that has grating characteristics different from those of the first grating assembly 116a may enable reducing the size of the optical spectrometer assembly 110 without compromising detection performance or, vice versa, may enable enhanced detection performance without increasing the size of the optical spectrometer assembly 110 relatively small. As an example of selection of respective grating characteristics for the first and second grating assemblies 116a, 118a, the first wavelength sub-range accessed via the first grating assembly 116a may be narrower than the second wavelength sub-range accessed via the second grating assembly 118, while the grating constant G₁ of the first grating assembly 116a may be higher than the grating constant G₂ of the second grating assembly 118a, thereby providing the first wavelength sub-range with a spectral resolution that is higher than (i.e. superior to) that provided for the second wavelength sub-range.

As an example, the first wavelength sub-range may cover wavelengths approximately from 120 nm to 230 nm and it may be referred to as a vacuum ultraviolet (VUV) range, whereas the second wavelength sub-range may cover wavelengths approximately from 225 nm to 430 nm and it may be referred to as an air range. Non-limiting examples of elements whose spectral lines fall within the VUV range include hydrogen (121 nm), nitrogen (149 nm), tellurium 170 nm, phosphorus (178 nm), sulfur (180 nm), arsenic (189 nm), carbon (193 nm), selenium (196 nm), antimony (206 nm), zinc (214 nm), cadmium (228 nm), whereas non-limiting examples of elements whose spectral lines fall within the air range include cadmium (228 nm), silicon (288nm), manganese (298 nm), tin (317 nm), copper (324 nm), tungsten (400 nm), lead (405 nm), calcium (422 nm).

As non-limiting examples of applicable grating characteristics, the first grating assembly 116a may comprise a reflective diffraction grating having a grating constant G₁ = 3600 1/mm, substrate radius R₁ = 501.17 mm and spectral resolution SR₁ ≤ 8 picometers (pm) to enable detection of the spectral lines of interest within the first wavelength sub-range from approximately 120 nm to 230 nm at sufficient accuracy and reliability, whereas the second grating assembly 118a may comprise a reflective diffraction grating having a grating constant G₂ = 2700 1/mm, substrate radius R₂ = 501.17 mm and resulting spectral resolution SR₂ ≤ 11 picometers (pm) to enable detection of the spectral lines of interest within the first wavelength sub-range from approximately 225 nm to 430 nm at sufficient accuracy and reliability. These characteristics of the first and second grating assemblies 116a, 118a serve as non-limiting examples and they enable providing the optical spectrometer assembly 110 with continuous (i.e. gap-free) wavelength coverage from approximately 120 nm to 430 nm, whereas gratings of different characteristics may be applied instead to provide a different wavelength coverage without departing from the scope of the optical spectrometer assembly 110 according to the present disclosure.

In a particular example of such a variation, at least some of the respective characteristics of the first and second grating assemblies 116a, 118a may be chosen differently from those of the above example such that the spectral resolution SR₂ for the second grating assembly 118a is lower than (i.e. inferior to) the spectral resolution SR₁ of the first grating assembly 116a while still considering the first and second wavelength sub-ranges according to the above example. Also in such variations, the grating constant G₁ and the substrate radius R₁ for the first grating assembly 116a may be chosen such that the resulting spectral resolution SR₁ for the first grating assembly 116a is smaller than 25 pm and/or the grating constant G₂ and the substrate radius R₂ for the second grating assembly 118a may be chosen such that the resulting spectral resolution SR₂ for the second grating assembly 118a is in a range from 35 pm to 65 pm.

In another example of varying characteristic of the first and second grating assemblies 116a, 118a from the above example, the division into the first and second wavelength sub-ranges may be different from the above example and the respective characteristics of the first and second grating assemblies 116a, 118a may be chosen in view of distribution of the one or more spectral lines of interest into the first and second wavelength sub-ranges in consideration of the intended usage of the optical spectrometer assembly 110 to ensure sufficient spectral resolution over the wavelength range(s) of interest.

The first reflector assembly 116b illustrated in the example of Figure 1, if present in the first optical sub-assembly 116, may comprise one or more planar mirrors arranged on the light path of the first spectrum diffracted from the first grating assembly 116a and oriented with respect to the first grating assembly 116a and the first detector assembly 116c such that the first spectrum diffracted from the first grating assembly 116a is reflected towards the first detector assembly 116c.

The first detector assembly 116c may comprise one or more image detectors, arranged in the light path of the first spectrum diffracted from the first grating assembly 116a such that the one or more image detectors receive the diffracted light directed thereto substantially in focus. In this regard, the one or more image detectors of the first detector assembly 116c may be arranged along a respective conceptual curve (e.g. one that follows or approximates an arc of a circle) having a curvature and position that depend on characteristics of the first grating assembly 116a. Moreover, the one or more image sensors of the first detector assembly 116c may be arranged such that adjacent image sensors partially overlap each other to ensure capturing any spectral line falling within the first wavelength sub-range. Along similar lines, the second detector assembly 118c may comprise one or more image detectors arranged in the light path of the second spectrum diffracted from the second grating assembly 118a such that they receive the diffracted light directed thereto substantially in focus. In this regard, the respective one or more image detectors of the second detector assembly 118c may be arranged along a respective conceptual curve having a curvature and position that depend on characteristics of the second grating assembly 118a. Furthermore, the one or more image sensors of the second detector assembly 118c may be arranged such that adjacent image sensors partially overlap each other to ensure capturing any spectral line falling within the second wavelength sub-range. The respective one or more image sensors of the first and second detector assembly 116c, 118c may comprise respective one or more solid state detectors, such as one or more charge coupled devices (CCDs) or one or more complementary metal-oxide-semiconductor (CMOS) sensors.

Each of the first detector assembly 116c and the second detector assembly 118c may be arranged to generate respective one or more measurement signals that are descriptive of the relative light intensities at different wavelengths present in the light received thereat, which may appear as emission peaks that represent respective spectral lines at respective wavelengths. In this regard, the measurement signals may comprise images that illustrate relative light intensities at different wavelengths within the first and second wavelength sub-ranges, data that enables constructing such images, or data extracted from such images. The first and second detector assemblies 116c, 118c may be further arranged to provide the respective one or more measurement signals to an analysis portion, whereas the analysis portion may be arranged to carry out an analysis of elemental composition based on spectral lines represented by the respective one or more measurement signals received from the first and second detector assemblies 116c, 118c. As non-limiting examples, results obtained from the analysis may include information that defines one or more elements represented by the spectral lines detected in the input beam received at the optical spectrometer assembly 110 and/or information that defines relative concentrations of the one or more elements represented by the spectral lines detected in said input beam.

The first optical sub-assembly 116 and the second optical sub-assembly 118 may be spatially isolated from each other in order to enable providing the first and second optical sub-assemblies 116, 118 in different atmospheres. As an example in this regard, the first optical sub-assembly 116 may be provided in a controlled atmosphere, where the controlled atmosphere may comprise e.g. a vacuum or an atmosphere purged by an inert gas such as argon. Conversely, the second optical sub-assembly 118 (possibly together with some other parts of the optical system of the optical spectrometer assembly 110) may be provided in an uncontrolled atmosphere, such as ambient air. In order to provide the spatial separation, the first optical sub-assembly 116 may be arranged in a first space and the second optical sub-assembly 118 may be provided in a second space that is isolated from the first space. In this regard, the first space may be a closed space to enable maintaining the controlled atmosphere therein and it may be provided with an entrance that allows for at least the first beam portion to enter the closed space and reach the first grating assembly 116a.

As an example in this regard, the entrance aperture 112 and the beam splitter 114 may constitute respective portions of an enclosure that defines the first space that hosts the first optical sub-assembly 116. Moreover, the entrance aperture 112 and the beam splitter 114 may be positioned with respect to each other such that there is an uninterrupted light path from the entrance aperture 112 to the beam splitter 116, the beam splitter 114 thereby receiving the input beam through the controlled atmosphere of the first space. Consequently, the beam splitter 114 may reflect the first beam portion within the first space towards the first grating assembly 116a and pass through the second beam portion to the second space and towards the second grating assembly 118a in the second space.

As an example of arranging components of the optical system of the optical spectrometer assembly 110 for use by the OES instrument, the beam splitter 114, the respective components of the first and second optical sub-assemblies 116, 118 as well as possible further components of the optical system of the optical spectrometer assembly 110 may be provided inside a cavity provided within a casing of the OES instrument. The cavity is preferably closed apart from the entrance aperture 112 that allows for the input beam to enter the optical spectrometer assembly 110 and meet the beam splitter 114 therein. The first optical sub-assembly 116 may be provided in a first compartment provided within the cavity, where the first compartment is isolated from other parts of the optical system to enable maintaining the controlled atmosphere (e.g. the vacuum or the purged atmosphere) for the first optical sub-assembly 116. In contrast, the remainder of the cavity that includes the second optical sub-assembly 118 (possibly together with some other components of the optical system of the optical spectrometer assembly 110) may be provided in uncontrolled atmosphere (e.g. ambient air). According to an example, along the lines described above, the input beam may enter the cavity through the first compartment, e.g. such that entrance aperture 112 leads directly to the first compartment and the input beam propagates in the controlled atmosphere through the first cavity towards the beam splitter 114 that is arranged to form a portion of the first cavity. According to another example, the entrance aperture 112 leads to the uncontrolled atmosphere in the cavity and the input beam propagates in the uncontrolled atmosphere towards the beam splitter 114 that is likewise provided in the uncontrolled atmosphere, while the first compartment within the cavity of the casing may be provided with an entrance window that allows for the first beam portion reflected from the beam splitter 114 to enter first compartment and reach the first grating assembly 116a.

Advantages of the optical spectrometer assembly 110 according to the present disclosure described in the foregoing and in the following include e.g. the following:
- Processing the first wavelength sub-range that requires the controlled atmosphere, e.g. the VUV range, separately from the second wavelength sub-range (and from the possible third wavelength sub-range) that does not need the controlled atmosphere enables significantly reducing the size of a volume within the cavity that requires maintenance of the controlled atmosphere (e.g. the vacuum or the purged atmosphere) in comparison to an approach where the optical system is provided in a single cavity or compartment and, consequently, where the cavity in its entirety requires the controlled atmosphere. While the smaller size of the volume to be kept in the vacuum or to be purged may be considered as an advantage of its own right, e.g. in case of purging via usage of an inert gas (such as argon) the reduced size of the purged volume further enables reducing the inert gas consumption while it typically also enables a shorter start-up time of the OES instrument via faster purging.
- Detection that is based on the single input beam received through the (single) entrance aperture 112 enables a simplified structure of the optical spectrometer assembly 110 in comparison to solutions where multiple entrance apertures are employed. In particular, usage of the beam splitter 114 to split the input beam received via the single entrance aperture 112 enables a straightforward design of the optical system where the (single) beam splitter 114 may be disposed at a relatively long distance from the entrance aperture 112. In multi-aperture designs one or more beam splitters are typically arranged in immediate vicinity of the entrance apertures to ensure transferring light at sufficient intensity to detector elements, which exposes the beam splitter(s) to high light densities that are prone to deteriorate reflection characteristics of the beam splitter(s) over time if located in non-controlled atmospheres. In contrast, in the design of the optical spectrometer assembly 110 according to the present disclosure the beam splitter 114 may be disposed relatively far from the entrance aperture 112, thereby making its positioning and exposure to high light intensities less critical.
- Usage of the first and second grating assemblies 116a, 118a allows for providing the optical spectrometer assembly 110 in a smaller size in comparison to designs where a single grating is applied for comparable detection performance by separately ensuring sufficient spectral resolution for the first wavelength sub-range and the second wavelength sub-range via suitable selection of respective characteristics of the first and second grating assemblies 116a, 118a.

While the optical spectrometer assembly 110 according to the example of Figure 1 provides a fully working solution having e.g. the advantages described above, the division to the first and second beam portions via operation of the beam splitter 114 and the respective grating characteristics chosen for the first and/or second grating assemblies 116a, 118a may result in a wavelength coverage that does not reach all spectral lines of interest at higher wavelengths and/or may result in a lower than desired spectral resolution at the first and/or the second wavelength sub-range. In order to address such performance issues, along the lines described in the foregoing, the optical spectrometer assembly 110 according to the example of Figure 1 may be further provided with the third optical sub-assembly arranged to receive a third beam portion that conveys the wavelengths within the third wavelength sub-range and to detect the one or more spectral lines of interest within the third wavelength sub-range. Along the lines described in the foregoing, the third wavelength sub-range is substantially non-overlapping with the first and second wavelength sub-ranges and it may cover wavelengths above those of the second wavelength sub-range. As an example in this regard, the third wavelength sub-range may cover wavelengths approximately from 420 nm to 780 nm and it may be referred to as an alkali range. Non-limiting examples of elements whose spectral lines fall within the alkali range include the following: calcium (422 nm), barium (455 nm), copper (510 nm), silver (546 nm), sodium (589 nm), lithium (671 nm), potassium (766 nm), oxygen (777 nm).

The one or more spectral lines of interest that fall within the third wavelength sub-range may be detected based on the third beam portion derived based on diffractions other than those of the first order from the first grating assembly 116a and/or from the second grating assembly 118a. As particular examples in this regard, the third beam portion may be extracted from the zeroth order diffraction from the first grating assembly 116a and/or from the zeroth order diffraction from the second grating assembly 118a. Non-limiting examples of transferring such diffractions in the third beam portion via the third optical assembly to a third detector assembly provided therein are described in the following.

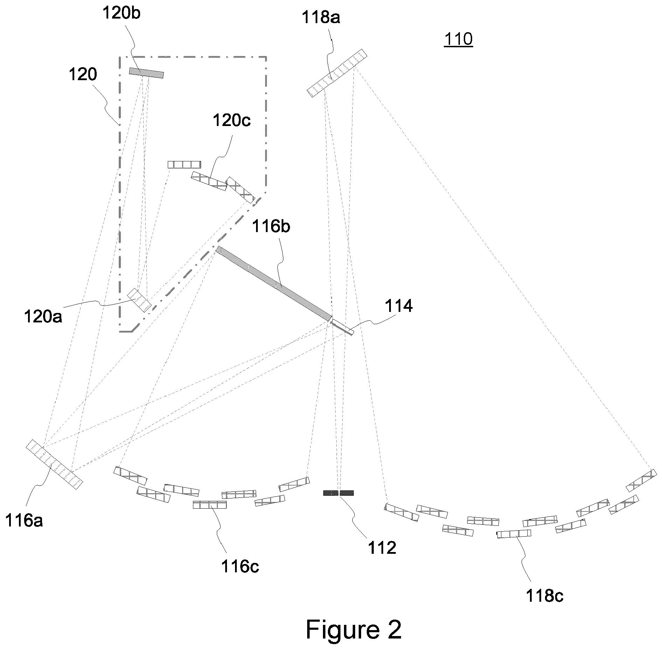

Figure 2 schematically illustrates some elements of the optical spectrometer assembly 110 according to another example, where the optical spectrometer assembly further includes a third optical sub-assembly 120, which is arranged to receive the third beam portion as the zeroth order diffraction from the first grating assembly 116a. It should be noted that for graphical clarity of illustration, Figure 2 does not explicitly identify elements of the optical spectrometer assembly 110 that belong to the first and second optical assemblies, whereas this information is readily illustrated in Figure 1.

The third optical sub-assembly 120 comprises a third grating assembly 120a, a third reflector assembly 120b and a third detector assembly 120c positioned with respect to each other such that the third reflector assembly 120b receives the third beam portion from the first grating assembly 116a and reflects the third beam portion towards the third grating assembly 120a, whereas the third detector assembly 120c receives the first order diffraction from the third grating assembly 120a. In this regard, the first grating assembly 116a may receive the first beam portion from a first side of its grating normal and it may diffract the first spectrum to the first side of the grating normal, whereas the third beam portion may be diffracted from the first grating assembly 116a to a second side of its grating normal (where the second side is opposite to the first side).

In the example of Figure 2, the first grating assembly 116a, the second grating assembly 118a and the third grating assembly 120a may comprise respective reflective diffraction gratings, where the grating constant G₁ and the substrate radius R₁ for the first grating assembly 116a and the grating constant G₂ and the substrate radius R₂ for the second grating assembly 118a are chosen such that the resulting spectral resolution SR₁ of the first grating assembly 116a is higher than the spectral resolution SR₂ of the second grating assembly 118a. Moreover, the grating constant G₃ and the substrate radius R₃ for the third grating assembly 120a may be chosen such that the resulting spectral resolution SR₃ of the third grating assembly 120a is lower than the spectral resolution SR₂ of the second grating assembly 118a. According to an example, the respective grating characteristics of the first, second and third grating assemblies 116a, 118a, 120a may include the following:
- G₁ = 3600 1/mm, R₁ = 501.17 mm, SR₁ ≤ 8 pm,
- G₂ = 2700 1/mm, R_{2 =} 501.17 mm, SR₂ ≤ 11 pm,
- G₃ = 1600 1/mm, R₃ = 149.732 mm, SR₃ ≤ 60 pm,
whereas the first, second and third detector assemblies 116c, 118c, 120c may be arranged for reception of the following spectral lines:
- spectral lines that fall within the first wavelength sub-range from 121 nm to 228 nm,
- spectral lines that fall within the second wavelength sub-range from 228 nm to 422 nm,
- spectral lines that fall within the third wavelength sub-range from 422 nm to 777 nm.

Hence, the optical spectrometer assembly 110 according to the example of Figure 2 enables continuous (i.e. gap-free) wavelength coverage from 121 nm to 777 nm.

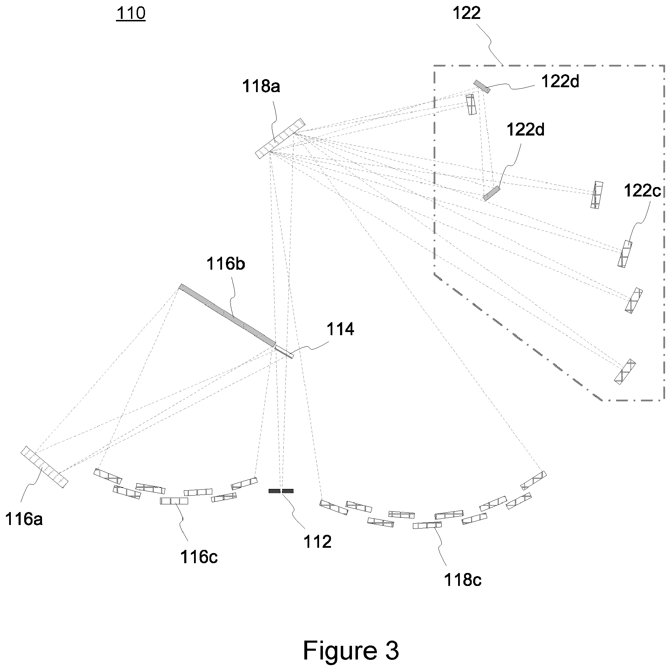

Figure 3 schematically illustrates some elements of an optical spectrometer assembly 110 according to a further example, where the optical spectrometer assembly 110 further includes a third optical sub-assembly 122, which is arranged to receive the third beam portion as the zeroth order diffraction from the second grating assembly 118a. As in the example of Figure 2, it should be noted that for graphical clarity of illustration Figure 3 does not explicitly identify elements of the optical spectrometer assembly 110 that belong to the first and second optical assemblies, whereas this information is readily illustrated in Figure 1.

The third optical sub-assembly 122 comprises a third detector assembly 122c that comprises a set of one or more image detectors arranged at a distance from each other and positioned with respect to the second grating assembly 118c such that each of the image detectors receives a respective portion of the third wavelength sub-range conveyed in the third beam portion. Consequently, each image sensor may be able to detect respective one or more spectral lines of interest within the respective portion of the third wavelength sub-range. The third optical sub-assembly 122 further comprises a reflector arrangement 122d including two or more reflector elements, where the reflector arrangement 122d is arranged to receive the zeroth order diffraction from the second grating assembly 118a and to redirect it back to the second grating assembly 118a for further diffraction therefrom towards the third detector assembly 122c. In this regard, the second grating assembly 118a may receive the second beam portion from a first side of its grating normal and diffract the second spectrum to the first side of the grating normal, whereas the third beam portion may be diffracted from the second grating assembly 118a to a second side of its grating normal (where the second side is opposite to the first side) for reception at the reflector arrangement 122d and for redirection therefrom back to the second grating assembly 118a from the second side of its grating normal in a desired angle of incidence. This results in the second grating assembly 118a providing the further diffraction (e.g. the first order diffraction) to the second side of its grating normal, which further diffraction serves as the third beam that conveys at least the third wavelength sub-range for reception at the third detector assembly 122c.

Along the lines of the examples of Figures 1 and 2, also in the example of Figure 3 the first grating assembly 116a and the second grating assembly 118a may comprise respective reflective diffraction gratings, where the grating constant G₁ and the substrate radius R₁ of the first grating assembly 116a and the grating constant G₂ and the substrate radius R₂ for the second grating assembly 118a are chosen such that the resulting spectral resolution SR₁ of the first grating assembly 116a is higher than the spectral resolution SR₂ of the second grating assembly 118a. According to an example, the respective grating characteristics of the first and second grating assemblies 116a, 118a may be the same as in the example of Figure 2, i.e. following:
- G₁ = 3600 1/mm, R₁ = 501.17 mm, SR₁ ≤ 8 pm,
- G₂ = 2700 1/mm, R₂ = 501.17 mm, SR₂ ≤ 11 pm,
whereas the first, second and third detector assemblies 116c, 118c, 122c may be arranged for reception of the following spectral lines:
- spectral lines that fall within the first wavelength sub-range from 121 nm to 228 nm,
- spectral lines that fall within the second wavelength sub-range from 228 nm to 422 nm,
- a predefined set of discrete spectral lines that fall within the third wavelength sub-range from 422 nm upwards, e.g. at 455 nm (barium), at 510 nm (copper), at 546 nm (silver), at 589 nm (sodium) and at 671 nm (lithium).

Hence, the optical spectrometer assembly 110 according to the example of Figure 3 provides continuous (i.e. gap-free) wavelength coverage from 121 nm to 422 nm while covering a predefined set of discrete spectral lines at wavelengths above 422 nm. In a variation of this example, the second grating assembly 118a may comprise a reflective diffraction grating that has the grating constant G₂ smaller than 2700 1/mm to extend the third wavelength sub-range towards higher wavelengths with the cost of reduced spectral resolution across the second and third wavelength sub-ranges. As an example in this regard, the grating constant G₂ of the second grating assembly 118a may be set to 2400 1/mm, which would enable extending the third wavelength sub-range such that e.g. a spectral line at 766 nm (potassium) would be included into the set of discrete spectral lines under consideration within the third wavelength sub-range with the cost of reducing the spectral resolution SR₂ of the second grating assembly 118a to SR₂ ≤ 14 pm.

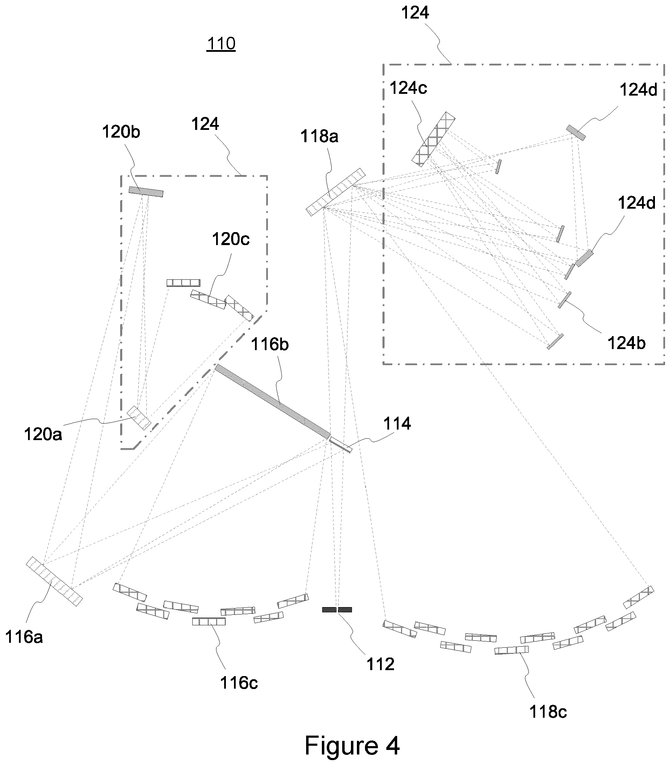

Figure 4 schematically illustrates some elements of an optical spectrometer assembly 110 according to a further example, where the optical spectrometer assembly 110 further includes a third optical sub-assembly 124, which is provided in two parts and arranged to receive the third beam portion in two parts. A first part of the third optical sub-assembly 124 (shown in the left in the illustration of Figure 4) receives a first part of the third beam portion as the zeroth order diffraction from the first grating assembly 116a and a second part of the third optical sub-assembly 124 (shown in the right in the illustration of Figure 4) receives a second part of the third beam portion as the zeroth order diffraction from the second grating assembly 118a. As in the respective examples of Figures 2 and 3, it should be noted that for graphical clarity of illustration Figure 4 does not explicitly identify elements of the optical spectrometer assembly 110 that belong to the first and second optical assemblies, whereas this information is readily illustrated in Figure 1.

The first part of the third optical sub-assembly 124 is similar to the third optical sub-assembly 120 described in the foregoing, whereas the second part of the third optical sub-assembly 124 comprises a supplementary third detector assembly 124c, a supplementary third reflector assembly 124b and a reflector arrangement 124d. In the example of Figure 4, the reflector arrangement 124d comprises two or more reflector elements, where the reflector arrangement 124d is arranged to receive the zeroth order diffraction from the second grating assembly 118a and to redirect it back to the second grating assembly 118a for further diffraction therefrom as the second part of the third beam portion towards the supplementary third detector assembly 124c via reflection from the supplementary third reflector assembly 124b. As in the case of the third optical sub-assembly 122 according to the example of Figure 3, also in the example of Figure 4 the second grating assembly 118a may receive the second beam portion from a first side of its grating normal and diffract the second spectrum to the first side of the grating normal, whereas the second part of the third beam portion may be diffracted from the second grating assembly 118a to a second of its grating normal (where the second side is opposite to the first side) for reception at the reflector arrangement 124d and for redirection therefrom back to the second grating assembly 118a from the second side of its grating normal in a desired angle of incidence. This results in the second grating assembly 118a providing the further diffraction (e.g. the first order diffraction) to the second side of its grating normal, which further diffraction serves as the second part of the third beam portion that conveys at least the second part of the third beam portion for reception at the supplementary third detector assembly 124c.

The supplementary third detector assembly 124c comprises an image detector and the supplementary third reflector assembly 124b comprises a set of one or more reflectors arranged at a distance from each other and positioned with respect to the second grating assembly 118c and the supplementary third detector assembly 124c such that each of the reflectors serves to reflect a respective portion of the third wavelength sub-range received thereat in the second part of the third beam portion towards the supplementary third detector assembly 124c.

Along the lines of the examples of Figures 1 and 2, also in the example of Figure 4 the first grating assembly 116a and the second grating assembly 118a may comprise respective reflective diffraction gratings, where the grating constant G₁ and the substrate radius R₁ for the first grating assembly 116a and the grating constant G₂ and the substrate radius R₂ for the second grating assembly 118a are chosen such that the resulting spectral resolution SR₁ of the first grating assembly 116a is higher than the spectral resolution SR₂ of the second grating assembly 118a. Moreover, the grating constant G₃ and the substrate radius R₃ for the third grating assembly 120a may be chosen such that the resulting spectral resolution SR₃ of the third grating assembly 120a is lower than the spectral resolution SR₂ of the second grating assembly 118a. According to an example, the respective grating characteristics of the first, second and third grating assemblies 116a, 118a, 120a may be the same as in the example of Figure 2, i.e. following:
- G₁ = 3600 1/mm, R₁ = 501.17 mm, SR₁ ≤ 8 pm,
- G₂ = 2700 1/mm, R₂ = 501.17 mm, SR₂ ≤ 11 pm,
- G₃ = 1600 1/mm, R₃ = 149.732 mm, SR₃ ≤ 60 pm,
whereas the first, second and third detector assemblies 116c, 118c, 122c may be arranged for reception of the following spectral lines:
- spectral lines that fall within the first wavelength sub-range from 121 nm to 228 nm,
- spectral lines that fall within the second wavelength sub-range from 228 nm to 422 nm,
- spectral lines that fall within the third wavelength sub-range from 422 nm to 777 nm.
- a predefined set of discrete spectral lines that fall within the third wavelength sub-range from 422 nm upwards, e.g. at 455 nm (barium), at 510 nm (copper), at 546 nm (silver), at 589 nm (sodium) and at 671 nm (lithium).

Hence, the optical spectrometer assembly 110 according to the example of Figure 4 provides continuous (i.e. gap-free) wavelength coverage from 121 nm to 777 nm while further separately covering a predefined set of discrete spectral lines at wavelengths above 422 nm. In this regard, the first part of the third beam portion derived as the zeroth order diffraction of the first beam portion from the first grating assembly 116a enables continuous wavelength coverage from 422 nm to 777 nm at a reasonable spectral resolution, whereas second part of the third beam portion derived as the zeroth order diffraction of the second beam portion from the second grating assembly 118a enables detection of selected spectral lines within the wavelength range from 422 nm to 777 nm at improved spectral resolution.

The beam splitter 114 applied in context of the optical spectrometer assemblies 110 according to the respective examples of Figures 2 to 4 may be similar to that described for the optical spectrometer assembly 110 according to the example of Figure 1. In this regard, any of the exemplifying ways of implementing the beam splitter 114 described in the foregoing in context of the optical spectrometer assembly 110 according to the example of Figure 1 are applicable in the respective examples of Figures 2 to 4 as well, whereas in case of the optical spectrometer assembly 110 according to the example of Figure 4 beam splitter options other than the dichroic mirror may be preferred in order to ensure sufficient light intensity also in the third optical sub-assembly 124.

Along the lines described in the foregoing, the respective third optical sub-assembly 120, 122, 124 of the optical spectrometer assemblies 110 according to the respective examples of Figures 2 to 4 may be provided in the uncontrolled atmosphere (such as ambient air) together with the second optical sub-assembly 118. The respective third detector assemblies 120c, 122c, 124c of the optical spectrometer assemblies 110 according to the respective examples of Figures 2 to 4 may be provided using respective one or more image sensors, as described in the foregoing for the first and second detector assemblies 116c, 118c in terms of capturing, whereas their operation and the manner of providing the respective measurement signals may be likewise similar to that described for the first and second detector assemblies 116c, 118c, *mutatis mutandis.*

Moreover, it is worth noting that the optical spectrometer assemblies 110 according to the respective examples of Figures 2 to 4 serve as non-limiting examples of the optical spectrometer assembly according to the example of Figure 1 further provided with the third optical sub-assembly 120, 122, 124 while various further approaches for providing the third optical sub-assembly for detecting one or more spectral lines of interest within the third wavelength sub-range based on light derived from the first grating assembly 116a and/or from the second grating assembly 118a may be employed instead without departing from the scope of the optical spectrometer assembly 110 according to the present disclosure.

## Claims

1. An optical spectrometer assembly (110) for an optical emission spectroscopy, OES, instrument, the optical spectrometer assembly (110) comprising:
an entrance aperture (112) arranged for entry of an input beam to the optical spectrometer assembly (110); and
an optical system comprising
a beam splitter (114) arranged to receive the input beam and split the input beam into a first beam portion that conveys at least wavelengths within a first wavelength sub-range and a second beam portion that conveys at least wavelengths within a second wavelength sub-range, where the first and second wavelength sub-ranges are substantially non-overlapping,
a first optical sub-assembly (116) comprising a first grating assembly (116a) arranged to diffract the first beam portion and a first detector assembly (116c) arranged to detect one or more spectral lines of interest within the first wavelength sub-range based on the diffracted first beam portion, and
a second optical sub-assembly (118) comprising a second grating assembly (118a) arranged to diffract the second beam portion and a second detector assembly (118c) arranged to detect one or more spectral lines of interest within the second wavelength sub-range based on the second beam portion,
wherein the first optical sub-assembly (116) is spatially isolated from other parts of the optical assembly so as to enable providing the first and second optical sub-assemblies (116, 118) in different atmospheres.

2. An optical spectrometer assembly (110) according to claim 1,
wherein the first grating assembly (116a) is arranged to receive the first beam portion from the beam splitter (114) and the first detector assembly (116c) is arranged to receive a first diffraction spectrum that covers the first wavelength sub-range from the first grating assembly (116a), and
wherein the second grating assembly (118a) is arranged to receive the second beam portion from the beam splitter (114) and the second detector assembly (118c) is arranged to receive a second diffraction spectrum that covers the second wavelength sub-range from the second grating assembly (118a).

3. An optical spectrometer assembly (110) according to claim 2, wherein the first optical sub-assembly (116) further comprises a first reflector assembly (116b) arranged to reflect the first diffraction spectrum received from the first grating assembly (116a) towards the first detector assembly (116c).

4. An optical spectrometer assembly (110) according to any of claims 1 to 3, wherein the second grating assembly (118a) has grating characteristics different from those of the first grating assembly (116a).

5. An optical spectrometer assembly (110) according to claim 4, wherein the first grating assembly (116a) is arranged to provide a spectral resolution higher than provided by the second grating assembly (118a).

6. An optical spectrometer assembly (110) according to any of claims 1 to 5, wherein the first optical sub-assembly (116) is provided in a controlled atmosphere and the second optical sub-assembly (118) is provided in an uncontrolled atmosphere.

7. An optical spectrometer assembly (110) according to claim 6, wherein at least one of the following applies:
said controlled atmosphere comprises a vacuum or an atmosphere purged by an inert gas,
said uncontrolled atmosphere comprises ambient air.

8. An optical spectrometer assembly (110) according claim 6 or 7, wherein
the first optical sub-assembly (116) is provided in a first space provided with the controlled atmosphere and the second optical sub-assembly (118) is provided in a second space that is isolated from the first space and provided with the uncontrolled atmosphere, and
the entrance aperture (112) and the beam splitter (114) are arranged in respective portions of an enclosure that defines the first space such that the beam splitter (114) is arranged to receive the input beam through the first space (114).

9. An optical spectrometer assembly (110) according to any of claims 1 to 8, wherein the beam splitter (114) comprises a beam splitting mirror arranged to
reflect at least the wavelengths within the first wavelength sub-range towards the first grating assembly (116a), thereby forming the first beam portion, and
pass through at least the wavelengths within the second wavelength sub-range towards the second grating assembly (118a), thereby forming the second beam portion.

10. An optical spectrometer assembly (110) according to claim 9, wherein the beam splitting mirror comprises one of the following:
a beam splitting mirror that is arranged to reflect a first predetermined amount of light without substantially limiting its spectral content to form the first beam portion and to pass through a second predefined amount of light without substantially limiting its spectral content to form the second beam portion; or
a beam splitting mirror that is arranged to reflect wavelengths that are shorter than or equal to a wavelength threshold to form the first beam portion and to pass through wavelengths that are longer than the wavelength threshold to form the second beam portion.

11. An optical spectrometer assembly (110) according to any of claims 1 to 10, wherein the optical system further comprises a third optical sub-assembly (120, 122, 124) arranged to
receive, as a zeroth order diffraction from the first grating assembly (116a) and/or as a zeroth order diffraction from the second grating assembly (118a), a third beam portion that conveys wavelengths within a third wavelength sub-range, and
detect one or more spectral lines of interest within the third wavelength sub-range,
where the third wavelength sub-range is substantially non-overlapping with the first and second wavelength sub-ranges and covers wavelengths that are longer than those covered by the first and second wavelength sub-ranges.

12. An optical spectrometer assembly (110) according to claim 11, wherein the third optical sub-assembly (120) is arranged to receive the third beam portion as the zeroth order diffraction from the first grating assembly (116a), where the third optical sub-assembly (120) comprises:
a third grating assembly (120a) arranged to diffract the third beam portion and a third detector assembly (120c) arranged to detect one or more spectral lines of interest within the third wavelength sub-range based on the diffracted third beam portion.

13. An optical spectrometer assembly (110) according to claim 12, wherein a spectral resolution provided by the third grating assembly (120a) is lower than respective spectral resolutions provided by the first grating assembly (116a) and the second grating assembly (118a).

14. An optical spectrometer assembly (110) according to claim 11, wherein the third optical sub-assembly (122) is arranged to receive the third beam portion as the zeroth order diffraction from the second grating assembly (118a), where the third optical sub-assembly (122) comprises:
a reflector arrangement (122d) that comprises two or more reflector elements arranged to receive the third beam portion and to redirect it back to the second grating assembly (118a) for a further diffraction therefrom; and
a third detector assembly (122c) that comprises a set of one or more image detectors, each arranged to detect respective one or more spectral lines of interest within a respective portion of the third wavelength sub-range based on said further diffraction from the second grating assembly (118a).

15. An optical spectrometer assembly (110) according to claim 11, wherein the third optical sub-assembly (124) is arranged to receive a first part of the third beam portion as the zeroth order diffraction from the first grating assembly (116a) and receive a second part of the third beam portion as the zeroth order diffraction from the second grating assembly (118a), where the third optical sub-assembly (124) comprises:
a first part including a third grating assembly (120a) arranged to diffract the first part of the third beam portion and a third detector assembly (120c) arranged to detect one or more spectral lines of interest within the third wavelength sub-range based on the diffracted first part of the third beam portion, and
a second part including
a reflector arrangement (122d) that comprises two or more reflector elements arranged to receive the third beam portion and to redirect it back to the second grating assembly (118a) for a further diffraction therefrom, and
a third reflector assembly (124b) and a supplementary third detector assembly (124c), where the third reflector assembly (124b) comprises a set of one or more reflectors, each arranged to reflect a respective portion of the second part of said further diffraction from the second grating assembly (118a) towards the supplementary third detector assembly (124c) that is arranged to detect one or more spectral lines of interest within the third wavelength sub-range based on the reflected portions of said further diffraction.
